# FASCICULE DE BREVET EUROPEEN

(11) **EP 2 836 746 B1**
(45) Date de publication et mention de la délivrance du brevet: **11.08.2021**
(21) Numéro de dépôt: 13712840.1
(22) Date de dépôt: 25.02.2013
(51) Int. Cl.: F16H 61/02, F16H 61/16

(54) **PROCÉDÉ DE COMMANDE DES CHANGEMENTS DE RAPPORTS DE TRANSMISSION D'UN GROUPE MOTOPROPULSEUR ET SYSTÈME ASSOCIÉ**
VERFAHREN ZUR STEUERUNG DER GANGSTUFENSCHALTUNGEN EINER ANTRIEBSEINHEIT UND DAZUGEHÖRIGES SYSTEM
METHOD FOR CONTROLLING GEAR RATIO SHIFTS OF A POWER UNIT AND ASSOCIATED SYSTEM

(30) Priorité: 12.04.2012 FR 1253373
(43) Date de publication de la demande: 18.02.2015
(73) Titulaire: Renault S.A.S., 92100 Boulogne-Billancourt (FR)
(72) Inventeur: PLANCHE, Grégory, F-91400 Orsay (FR)
(86) Numéro de dépôt international: PCT/FR2013/050379
(87) Numéro de publication internationale: WO 2013/153299

(56) Documents cités:
- DE-A1- 19 740 648
- DE-A1-102006 016 710
- JP-A- 2001 336 630
- US-A1- 2010 305 823

## Description

L'invention concerne la commande des changements de rapports de transmission d'un groupe motopropulseur pour véhicule automobile équipé d'une boîte de vitesses automatique.

L'invention concerne particulièrement un procédé de commande ou de pilotage des changements de rapports de transmission qui détermine, en mode automatique, le rapport de transmission à appliquer à partir de lois de passage prédéterminées, et qui prend en compte la sélection volontaire manuelle d'un rapport de transmission par le conducteur du véhicule en mode manuel assisté.

On connaît, par les demandes de brevet FR-A1-2 804 737 et FR-A1-2 866 936, des procédés de commande des changements de rapports de transmission d'un groupe motopropulseur équipé d'une boîte de vitesses automatique dans lesquels il est prévu une étape de forçage de passage de rapport imposé à la transmission notamment lorsqu'un rapport montant est demandé par le conducteur.

De tels changements forcés de rapports montants sont réalisés si le régime moteur du groupe motopropulseur est inférieur au régime rupteur maximal autorisé par ledit groupe. On entend par « régime rupteur maximal », le régime moteur admissible que peut supporter le groupe motopropulseur sans risque de dommage.

Le document DE 197 40 648 décrit un procédé de commande des changements de rapports de transmission d'un groupe motopropulseur équipé d'une boîte de vitesses automatique dans lequel des changements forcés de rapports montants sont réalisés lorsque le régime du groupe motopropulseur est supérieur à un régime maximal prédéterminé. Dans ce document, le procédé de commande permet donc de réaliser un passage automatique du rapport montant suivant lorsque le régime moteur du groupe motopropulseur atteint un seuil prédéterminé afin d'éviter un fonctionnement en surrégime dudit groupe.

Le document JP 2001 336630 divulgue un dispositif fournissant un contrôle de rapport de vitesses pour une transmission automatique qui permet un passage manuel de rapport de vitesses supérieur. Le dispositif est doté d'un moyen de détection d'un surrégime, un passage de rapport de vitesses supérieur étant mis en œuvre si une vitesse du moteur est détectée supérieure à une vitesse critique.

La présente invention vise à prévoir un procédé de commande ou de pilotage des changements de rapports de transmission d'un groupe motopropulseur pour véhicule automobile équipé d'une boîte de vitesses automatique permettant d'offrir de nouvelles fonctionnalités.

Dans un mode de mise en œuvre, le procédé de commande des changements de rapports de transmission d'un groupe motopropulseur pour véhicule automobile équipé d'une boîte de vitesses automatique, comprend en mode de commande manuel assisté une étape de comparaison du régime moteur du groupe motopropulseur par rapport à un régime rupteur maximal autorisé dudit groupe, une étape de vérification de l'activation par le conducteur d'un mode de conduite sportive, et une étape de correction du rapport de transmission engagé pour forcer automatiquement un passage de rapport montant lorsque le mode de conduite sportive est activé et lorsque le régime moteur du groupe motopropulseur est supérieur au régime rupteur maximal.

Le passage de rapport montant est avantageusement imposé après une temporisation. La durée de temporisation peut dépendre du rapport de transmission engagé.

Dans un mode de mise en œuvre, la temporisation est arrêtée et remise à zéro lorsque le régime moteur du groupe motopropulseur devient inférieur à un seuil de réinitialisation prédéterminé qui est inférieur au régime rupteur maximal autorisé. Alternativement ou en combinaison, la temporisation est arrêtée et remise à zéro lors d'une réception d'une consigne de passage du rapport montant demandé par le conducteur.

L'invention concerne également un système de commande des changements de rapports de transmission d'un groupe motopropulseur équipé d'une boîte de vitesses automatique, comprenant un module de correction du rapport de transmission engagé apte à recevoir en mode de commande manuel assisté des informations relatives à l'activation d'un mode de conduite sportive, au régime moteur du groupe motopropulseur et à un régime rupteur maximal autorisé pour ledit groupe. Le module de correction est apte à délivrer un signal de passage automatique de rapport montant lorsque le mode de conduite sportive est activé et lorsque le régime moteur du groupe motopropulseur est supérieur au régime rupteur maximal.

Dans un mode de réalisation, le module de correction comprend un premier moyen de comparaison apte à comparer la valeur du régime moteur du groupe motopropulseur à la valeur du régime rupteur maximal autorisé, et un second moyen de comparaison apte à comparer la valeur du régime moteur du groupe motopropulseur et la valeur du régime rupteur maximal autorisé moins une constante prédéterminée.

Le module de correction peut également comprendre un premier module logique ET recevant en entrée un signal de sortie du premier moyen de comparaison et un signal relatif à l'activation du mode de conduite sportive, un module logique NON-OU recevant en entrée un signal de sortie du second moyen de comparaison et une consigne de passage du rapport montant demandé par le conducteur, et un second module logique ET recevant en entrée le signal de sortie du premier module logique ET et le signal de sortie du module logique NON-OU. Le module de correction peut encore comprendre un module de temporisation recevant en entrée le signal de sortie du second module logique ET et délivrant en sortie un signal de passage automatique du rapport montant après une temporisation calibrée. De préférence, la durée de temporisation dépend du rapport de transmission engagé.

La présente invention sera mieux comprise à l'étude d'un mode de réalisation pris à titre d'exemple nullement limitatif et illustré par les dessins annexés, sur lesquels :
- la figure 1 illustre schématiquement un système de commande des changements de rapport selon un exemple de réalisation de l'invention,
- la figure 2 illustre schématiquement un module de correction du système de commande de la figure 1, et
- la figure 3 est un organigramme du procédé de commande des changements de rapport selon un mode de mise en œuvre de l'invention.

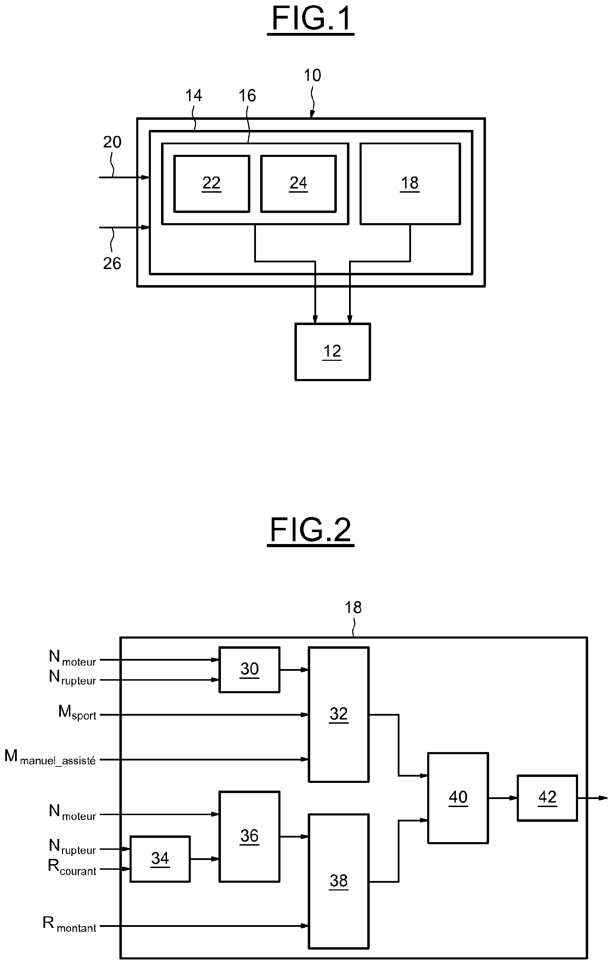

La figure 1 présente un exemple de système 10 de commande destiné à permettre un pilotage des changements de rapports de transmission d'un groupe motopropulseur équipé d'une boîte de vitesses 12 automatique. Le système 10 comprend un dispositif électronique de supervision 14 pourvu d'un module de détermination 16 apte à déterminer en mode de commande automatique le rapport de transmission à appliquer à la boîte de vitesses 12, et d'un module de correction 18 apte à corriger ou non en mode de commande manuel assisté le rapport de transmission engagé.

Le système 10 détermine en temps réel un rapport de transmission à appliquer ou une correction du rapport de transmission engagé à partir d'informations provenant de capteurs 20, notamment des informations représentatives de la vitesse du véhicule, du régime moteur du groupe motopropulseur, de l'actionnement d'un levier de changement de vitesses ou de palettes de commande au volant, de la position de la pédale d'accélérateur, de la pression de freinage, et de l'accélération longitudinale et transversale du véhicule.

Le module de détermination 16 comprend une pluralité de lois de passages 22 cartographiées et un module de correction dynamique 24. Le module de correction dynamique 24 permet de traiter des informations qui proviennent des capteurs 20 pour fournir des grandeurs dont les valeurs sont représentatives des conditions d'environnement, par exemple de la masse du véhicule, de la pente de la route, de l'effort résistant, du type de route, des conditions de circulation, etc.

Les lois de passage 22 sont sélectionnées selon le mode de conduite retenu par le conducteur, qui peuvent par exemple être au nombre de trois et qualifiées respectivement de conduite normale, de conduite sportive et de conduite course. Les demandes du conducteur sur le mode de conduite à appliquer peuvent par exemple être exprimées au travers d'un bouton 26 d'actionnement avec transmission de la consigne au dispositif électronique de supervision 14.

Le mode de conduite normale peut par exemple être le mode par défaut. Le mode de conduite normal consiste en une recherche d'un haut niveau d'agrément, en la possibilité de doser finement l'accélération pour un fonctionnement souple et sans à-coup de sorte à obtenir des changements de rapports les plus confortables possible. Le mode de conduite sportive favorise la recherche de la vivacité et des réactions instantanées du moteur, en privilégiant les temps de passage des rapports de transmission par rapport aux chocs générés lors des changements de rapports. Le mode de conduite course peut être un mode de conduite entièrement manuel.

En mode de commande automatique, le module de détermination 16 prend en considération les lois de passage 22 associées au mode de conduite normale ou sportive activé et détermine en fonction des informations issues du module de correction dynamique 24 le rapport de transmission à appliquer à la boîte de vitesses 12 pour optimiser le point de fonctionnement du groupe motopropulseur.

En mode de commande manuel assisté, le conducteur peut intervenir manuellement sur le passage de rapports via le levier ou les palettes de commande. Pour le mode manuel assisté et pour un mode de conduite normal activé, les automatismes suivants restent actifs :
- une consigne de passage du rapport montant suivant demandé par le conducteur n'est pas prise en compte si le régime moteur prévisionnel correspondant au rapport montant entraîne un sous régime,
- une consigne de passage du rapport rétrograde précédent demandé par le conducteur n'est pas prise en compte si le régime moteur prévisionnel correspondant au rapport rétrograde entraîne un surrégime,
- un passage automatique du rapport montant si le régime moteur atteint un seuil prédéterminé qui est inférieur au régime rupteur maximal autorisé dudit groupe,
- un passage automatique du rapport rétrograde si le régime moteur atteint un seuil prédéterminé, et
- un passage automatique de rapport montant selon les lois de passage cartographiées lors d'un enfoncement maximal de la pédale d'accélérateur.

Lorsque le mode de conduite sportive est activé, par rapport aux automatismes actifs du mode de conduite normal en mode de commande manuel assisté, l'automatisme de passage automatique du rapport montant lorsque le régime moteur atteint le seuil prédéterminé inférieur au régime rupteur maximal est modifié. Ceci est rendu possible par le module de correction 18 comme cela va maintenant être décrit.

Comme illustré à la figure 2, le module de correction 18 comprend un premier moyen de comparaison 30 apte à comparer la valeur du régime moteur *Nₘₒₜₑᵤᵣ* du groupe motopropulseur à la valeur du régime rupteur maximal *Nᵣᵤₚₜₑᵤᵣ* autorisé par ledit groupe. Si la valeur du régime moteur *Nₘₒₜₑᵤᵣ* est supérieure à la valeur du régime rupteur maximal *Nᵣᵤₚₜₑᵤᵣ,* le premier moyen de comparaison 30 délivre en sortie un signal booléen non nul.

Ce signal de sortie est reçu à une entrée d'un premier module logique ET 32 du module de correction qui reçoit également sur une deuxième entrée un signal booléen relatif à l'activation du mode de conduite sportive *Mₛₚₒᵣₜ,* et sur une troisième entrée un signal booléen relatif à l'enclenchement du mode de commande manuel assisté *M_{manuel_assisté}.* Le premier module logique ET 32 délivre en sortie un signal booléen résultant de la combinaison logique ET. Le signal booléen délivré en sortie du module logique ET 32 est non nul lorsque les trois conditions suivantes sont vérifiées : la valeur du régime moteur *Nₘₒₜₑᵤᵣ* du groupe motopropulseur est supérieure à la valeur du régime rupteur maximal *Nᵣᵤₚₜₑᵤᵣ,* le mode de conduite sportive *Mₛₚₒᵣₜ* est activé, et le mode de commande manuel assisté *M_{manuel_assisté}* est enclenché.

Le module de correction 18 comprend également un module d'acquisition 34 recevant en entrée la valeur du régime rupteur maximal *Nᵣᵤₚₜₑᵤᵣ* et le rapport de transmission engagé courant *R_{couran}t.* Le module d'acquisition 34 est apte à délivrer en sortie une valeur égale à la valeur du régime rupteur maximal autorisée moins une constante C prédéterminée qui est fonction du rapport de transmission courant. La constante C est définie de sorte à ne pas prendre en compte une éventuelle instabilité du régime moteur. Ce signal de sortie est reçu à une entrée d'un second moyen de comparaison 36 du module de correction qui reçoit sur une deuxième entrée la valeur du régime moteur *Nₘₒₜₑᵤᵣ* du groupe motopropulseur. Si la valeur du régime moteur *Nₘₒₜₑᵤᵣ* est supérieure à la valeur du régime rupteur maximal autorisé moins la constante C prédéterminée, le second moyen de comparaison 36 délivre en sortie un signal booléen nul.

Ce signal de sortie est reçu à une entrée d'un module logique NON-OU 38 qui reçoit également sur une deuxième entrée un signal booléen relatif à une demande par le conducteur de passage de rapport montant *Rₘₒₙₜₐₙₜ.* Cette demande ou consigne de changement peut correspondre à un appui long ou un appui court.

Le module logique NON-OU 38 délivre en sortie un signal booléen non nul si, à la fois, la valeur du régime moteur *Nₘₒₜₑᵤᵣ* du groupe motopropulseur est inférieure à la valeur du régime rupteur maximal *Nᵣᵤₚₜₑᵤᵣ* moins la constante C, et aucun passage de rapport montant n'est demandé par le conducteur.

Le signal booléen en sortie du module logique NON-OU 38 est délivré à un second module logique ET 40 qui reçoit également sur une deuxième entrée le signal booléen délivré en sortie du premier module logique ET 32. Le module logique ET 40 délivre en sortie un signal booléen résultant de la combinaison logique ET. Le signal booléen délivré en sortie du module logique ET 40 est non nul lorsque les signaux booléens délivrés en sortie des modules logiques ET 32 et NON-OU 38 sont tous les deux non nuls.

Le second module logique ET 40 délivre un signal booléen à un module de temporisation 42 qui peut délivrer en sortie à la boîte de vitesse un signal de passage automatique du rapport montant après une temporisation calibrée. La durée de temporisation dépend du rapport de transmission courant *R_{courant}.* La temporisation est arrêtée et remise à zéro si le signal boléen délivré en sortie du module logique ET 40 passe d'un état non nul à nul.

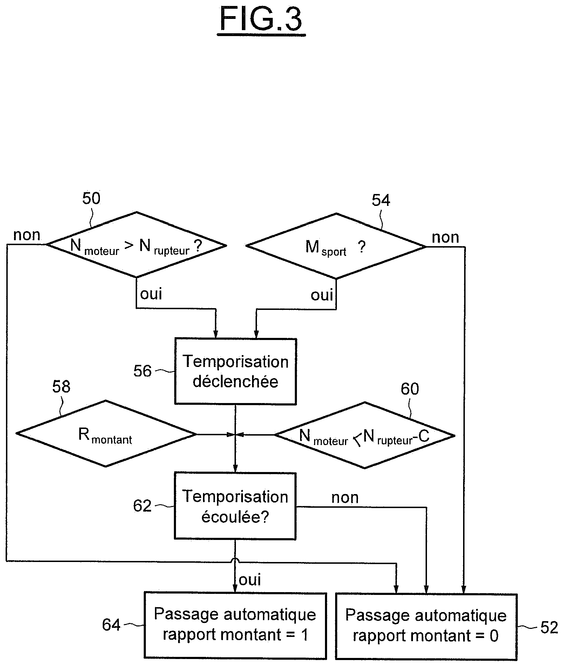

La figure 3 représente un exemple d'organigramme du procédé de commande des changements de rapports de transmission selon un mode de mise en œuvre.

Dans une première étape 50, on compare la valeur du régime moteur *Nₘₒₜₑᵤᵣ* du groupe motopropulseur à la valeur du régime rupteur maximal *Nᵣᵤₚₜₑᵤᵣ* autorisé par ledit groupe. Si la valeur du régime moteur *Nₘₒₜₑᵤᵣ* est inférieure à la valeur du régime rupteur maximal *Nᵣᵤₚₜₑᵤᵣ,* le passage automatique de rapport montant n'est pas autorisé dans une étape 52, c'est-à-dire que le rapport de transmission engagé n'est pas modifié.

Simultanément à l'étape 50, on vérifie dans une étape 54 si le mode de conduite sportive *Mₛₚₒᵣt* a été activé par le conducteur. Si le mode de conduite sportive n'a pas été activé, le passage automatique du rapport montant n'est pas autorisé dans l'étape 52.

Au contraire, si le mode de conduite sportive *Mₛₚₒᵣₜ* a été activé et que la valeur du régime moteur *Nₘₒₜₑᵤᵣ* devient supérieure à la valeur du régime rupteur maximal *Nᵣᵤₚₜₑᵤᵣ,* une temporisation est déclenchée dans une étape 56 suivante. La temporisation est calibrée en fonction du rapport de transmission courant engagé. A titre indicatif, cette temporisation peut être de l'ordre de 500 ms.

Pendant la durée de temporisation, lors d'une étape 58, on vérifie si une consigne de passage de rapport montant est demandée par le conducteur. Si cela est le cas, la temporisation est arrêtée et remise à zéro. Pendant la durée de temporisation, on vérifie simultanément lors d'une étape 60, si la valeur du régime moteur *Nₘₒₜₑᵤᵣ* est inférieure à la valeur du régime rupteur maximal *Nᵣᵤₚₜₑᵤᵣ* moins la constante C prédéterminée. Si cela est le cas, la temporisation est arrêtée et remise à zéro.

Lors d'une étape 62 suivante, on vérifie si la temporisation est écoulée. Si la temporisation n'est pas écoulée, c'est-à-dire qu'elle a été arrêtée et remise à zéro, le passage automatique de rapport montant n'est pas commandé lors de l'étape 52. Au contraire, si la temporisation est écoulée, dans une étape 64, le passage automatique de rapport montant est imposé à la transmission.

Le forçage ou correction du rapport de transmission engagé permet pour le mode de conduite sportive d'atteindre des valeurs de régime moteur élevées dépassant un régime de puissance maximale du moteur autorisé par le constructeur.

Dans l'exemple de réalisation illustré, le mode de conduite sportive est activé par un bouton actionné par le conducteur. En variante, il pourrait également être possible, sans sortir du cadre de la présente invention, de prévoir de façon alternative ou additionnelle une activation du mode de conduite sportive en fonction d'informations provenant notamment des capteurs caractérisant la conduite du conducteur à court terme.

## Revendications

1. Procédé de commande des changements de rapports de transmission d'un groupe motopropulseur pour véhicule automobile équipé d'une boîte de vitesses automatique, comprenant en mode de commande manuel assisté :
- une étape de comparaison (50) du régime moteur du groupe motopropulseur par rapport à un régime rupteur maximal autorisé dudit groupe,
- une étape de vérification (54) de l'activation par le conducteur d'un mode de conduite sportive,
- une étape de temporisation pendant laquelle on vérifie (60) si la valeur de régime moteur est inférieure à la valeur de régime rupteur maximal moins une constante déterminée, et (58) si un passage montant est demandé par le conducteur, et
- une étape de correction du rapport de transmission engagé pour forcer automatiquement le rapport montant,
**caractérisé en ce que** :
- la temporisation est déclenchée si le mode de conduite sportive a été activé et si la valeur du régime moteur devient supérieure à la valeur du régime rupteur maximal,
- la temporisation est arrêtée et remise à zéro lorsque le régime moteur du groupe motopropulseur devient inférieur à un seuil de réinitialisation prédéterminé qui est inférieur au régime rupteur maximal autorisé,
- la temporisation est arrêtée et remise à zéro lors d'une réception d'une consigne de passage du rapport montant demandé par le conducteur, et
- si la temporisation est écoulée (62), le rapport de transmission engagé est corrigé (64) pour forcer automatiquement un passage de rapport montant après la temporisation, lorsque le mode de conduite sportive est activé et lorsque le régime moteur du groupe motopropulseur est supérieur au régime rupteur maximal.

2. Procédé selon la revendication 1, dans lequel la durée de temporisation dépend du rapport de transmission engagé.

3. Système (10) de commande des changements de rapports de transmission d'un groupe motopropulseur équipé d'une boîte de vitesses automatique, comprenant un module de correction (18) du rapport de transmission engagé apte à recevoir en mode de commande manuel assisté des informations relatives au régime moteur (*Nₘₒₜₑᵤᵣ*) du groupe motopropulseur et à un régime rupteur (*Nᵣᵤₚₜₑᵤᵣ*) maximal autorisé pour ledit groupe, le module de correction (18)étant apte à délivrer un signal de passage automatique de rapport montant lorsque le mode de conduite sportive est activé et lorsque le régime moteur du groupe motopropulseur est supérieur au régime rupteur maximal, caractérisé en ce le module de correction (18) :
- est apte à délivrer un signal de passage automatique de rapport montant après une temporisation, la temporisation étant déclenchée si le mode de conduite sportive a été activé et si la valeur du régime moteur devient supérieure à la valeur du régime rupteur maximal, la temporisation étant arrêtée et remise à zéro lorsque le régime moteur du groupe motopropulseur devient inférieur à un seuil de réinitialisation prédéterminé qui est inférieur au régime rupteur maximal autorisé,
- est apte à recevoir en mode de commande manuel assisté des informations relatives à l'activation d'un mode de conduite sportive (Mₛₚₒᵣₜ), et
- en ce qu'il comprend un premier moyen de comparaison (30) apte à comparer la valeur du régime moteur du couple motopropulseur à la valeur du régime rupteur maximal autorisé, et un second moyen de comparaison (36) apte à comparer la valeur du régime moteur du groupe motopropulseur et la valeur du régime rupteur maximal autorisé moins une constante prédéterminée.

4. Système (10) selon la revendication 3, dans lequel le module de correction (18) comprend un premier module logique ET (32) recevant en entrée un signal de sortie du premier moyen de comparaison (30) et un signal relatif à l'activation du mode de conduite sportive, un module logique NON-OU (38) recevant en entrée un signal de sortie du second moyen de comparaison (36) et une consigne de passage du rapport montant demandé par le conducteur, et un second module logique ET (40) recevant en entrée le signal de sortie du premier module logique ET (32) et le signal de sortie du module logique NON- OU (38).

5. Système (10) selon la revendication 4, dans lequel le module de correction (18) comprend un module de temporisation (42) recevant en entrée le signal de sortie du second module logique ET (40) et délivrant en sortie un signal de passage automatique du rapport montant après une temporisation calibrée.

6. Système (10) selon la revendication 5, dans lequel la durée de temporisation dépend du rapport de transmission engagé.

## Patentansprüche

1. Verfahren zur Steuerung von Getriebegangwechseln einer Antriebseinheit für ein mit einem Automatikgetriebe ausgestattetes Kraftfahrzeug, das im manuellen Servosteuerungsmodus enthält:
- einen Schritt des Vergleichs (50) der Motordrehzahl der Antriebseinheit bezüglich einer erlaubten maximalen Unterbrecherdrehzahl der Einheit,
- einen Schritt der Überprüfung (54) der Aktivierung eines sportlichen Fahrmodus durch den Fahrer,
- einen Schritt der Verzögerung, während dessen geprüft wird (60), ob der Motordrehzahlwert niedriger als der maximale Unterbrecherdrehzahlwert minus eine bestimmte Konstante ist, und (58), ob ein Heraufschalten vom Fahrer gefordert wird, und
- einen Schritt der Korrektur des eingelegten Getriebegangs, um automatisch den aufsteigenden Getriebegang zu erzwingen,
**dadurch gekennzeichnet, dass**:
- die Verzögerung ausgelöst wird, wenn der sportliche Fahrmodus aktiviert wurde und wenn der Wert der Motordrehzahl höher wird als der Wert der maximalen Unterbrecherdrehzahl,
- die Verzögerung angehalten und auf null zurückgestellt wird, wenn die Motordrehzahl der Antriebseinheit niedriger wird als eine vorbestimmte Rücksetzschwelle, die niedriger ist als die erlaubte maximale Unterbrecherdrehzahl,
- die Verzögerung bei Empfang eines Befehls des Einlegens des vom Fahrer angeforderten aufsteigenden Getriebegangs angehalten und auf null zurückgestellt wird, und
- wenn die Verzögerung abgelaufen ist (62), der eingelegte Getriebegang korrigiert wird (64), um automatisch ein Einlegen eines aufsteigenden Gangs nach der Verzögerung zu erzwingen, wenn der sportliche Fahrmodus aktiviert ist und wenn die Motordrehzahl der Antriebseinheit höher ist als die maximale Unterbrecherdrehzahl.

2. Verfahren nach Anspruch 1, wobei die Verzögerungsdauer vom eingelegten Getriebegang abhängt.

3. System (10) zur Steuerung der Getriebegangwechsel einer Antriebseinheit, die mit einem Automatikgetriebe ausgestattet ist, das ein Korrekturmodul (18) des eingelegten Getriebegangs aufweist, das im manuellen Servosteuerungsmodus Informationen bezüglich der Motordrehzahl (Nₘₒₜₑᵤᵣ) der Antriebseinheit und einer erlaubten maximalen Unterbrecherdrehzahl (Nᵣᵤₚₜₑᵤᵣ) für die Einheit empfangen kann, wobei das Korrekturmodul (18) ein Signal des automatischen Einlegens eines aufsteigenden Gangs liefern kann, wenn der sportliche Fahrmodus aktiviert und die Motordrehzahl der Antriebseinheit höher ist als die maximale Unterbrecherdrehzahl, **dadurch gekennzeichnet, dass** das Korrekturmodul (18):
- ein Signal des automatischen Einlegens eines aufsteigenden Getriebegangs nach einer Verzögerung liefern kann, wobei die Verzögerung ausgelöst wird, wenn der sportliche Fahrmodus aktiviert wurde und wenn der Wert der Motordrehzahl höher wird als der Wert der maximalen Unterbrecherdrehzahl, wobei die Verzögerung angehalten und auf null zurückgestellt wird, wenn die Motordrehzahl der Antriebseinheit niedriger wird als eine vorbestimmte Rücksetzschwelle, die niedriger ist als die erlaubte maximale Unterbrecherdrehzahl,
- im manuellen Servosteuerungsmodus Informationen bezüglich der Aktivierung eines sportlichen Fahrmodus (Mₛₚₒᵣₜ) empfangen kann, und
- dass es eine erste Vergleichseinrichtung (30), die den Wert der Motordrehzahl der Antriebseinheit mit dem Wert der erlaubten maximalen Unterbrecherdrehzahl vergleichen kann, und eine zweite Vergleichseinrichtung (36) enthält, die den Wert der Motordrehzahl der Antriebseinheit mit dem Wert der erlaubten maximalen Unterbrecherdrehzahl minus eine vorbestimmte Konstante vergleichen kann.

4. System (10) nach Anspruch 3, wobei das Korrekturmodul (18) ein erstes logisches UND-Modul (32), das am Eingang ein Ausgangssignal der ersten Vergleichseinrichtung (30) und ein Signal bezüglich der Aktivierung des sportlichen Fahrmodus empfängt, ein logisches NICHT-ODER-Modul (38), das am Eingang ein Ausgangssignal der zweiten Vergleichseinrichtung (36) und einen Befehl des vom Fahrer geforderten Einlegens des aufsteigenden Getriebegangs empfängt, und ein zweites logisches UND-Modul (40) enthält, das am Eingang das Ausgangssignal des ersten logischen UND-Moduls (32) und das Ausgangssignal des logischen NICHT-ODER-Moduls (38) empfängt.

5. System (10) nach Anspruch 4, wobei das Korrekturmodul (18) ein Verzögerungsmodul (42) enthält, das am Eingang das Ausgangssignal des zweiten logischen UND-Moduls (40) empfängt und am Ausgang ein Signal des automatischen Einlegens des aufsteigenden Getriebegangs nach einer kalibrierten Verzögerung liefert.

6. System (10) nach Anspruch 5, wobei die Verzögerungsdauer vom eingelegten Getriebegang abhängt.

## Claims

1. Method for controlling gear ratio shifts of a power unit for a motor vehicle equipped with an automatic gearbox, comprising, in assisted manual control mode:
- a step of comparing (50) the engine speed of the power unit with a maximum circuit breaker speed authorized for said unit,
- a step of checking (54) the activation by the driver of a sport driving mode,
- a time delay step during which it is checked (60) if the value of the engine speed is less than the maximum circuit breaker speed value minus a predetermined constant, and (58) if an upshift is requested by the driver, and
- a step of correcting the gear ratio engaged so that the upshift is automatically imposed,
**characterized in that**:
- the time delay is triggered if the sport driving mode has been activated and if the value of the engine speed becomes greater than the value of the maximum circuit breaker speed,
- the time delay is stopped and reset to zero when the engine speed of the power unit becomes less than a predetermined reset threshold which is less than the authorized maximum circuit breaker speed,
- the time delay is stopped and reset to zero on reception of an upshift instruction given by the driver, and
- if the time delay has elapsed (62), the gear ratio engaged is corrected (64) so that an upshift is automatically imposed after the time delay, when the sport driving mode is activated and when the engine speed of the power unit is greater than the maximum circuit breaker speed.

2. Method according to Claim 1, in which the duration of the time delay depends on the gear ratio engaged.

3. System (10) for controlling gear ratio shifts of a power unit equipped with an automatic gearbox, comprising a module (18) for correcting the gear ratio engaged and able to receive, in assisted manual control mode, information relating to the engine speed (*N_{engine}*) of the power unit and to a maximum circuit breaker speed (*N_{circuit breaker}*) authorized for said unit, the correction module (18) being able to deliver an automatic upshift signal when the sport driver mode is active and when the engine speed of the power unit is greater than the maximum circuit breaker speed, **characterized in that** the correction module (18):
- is able to deliver an automatic upshift signal after a time delay, the time delay being triggered if the sport driving mode has been activated and if value of the engine speed becomes greater than the value of the maximum circuit breaker speed, the time delay being stopped and reset to zero when the engine speed of the power unit becomes less than a predetermined reset threshold which is less than the authorized maximum circuit breaker speed,
- is able to receive, in assisted manual control mode, information relating to the activation of a sport driving mode (Mₛₚₒᵣₜ), and
- **in that** it comprises a first means of comparison (30) able to compare the value of the engine speed of the power unit with he value of the authorized maximum circuit breaker speed, and a second means of comparison (36) able to compare the value of the engine speed of the power unit and the value of the authorized maximum circuit breaker speed minus a predetermined constant.

4. System (10) according to Claim 3, in which the correction module (18) comprises a first logic AND module (32) receiving on its input an output signal of the first means of comparison (30) and a signal relating to the activation of the sport driving mode, a logic NOR module (38) receiving on its input an output signal of the second means of comparison (36) and an upshift instruction given by the driver, and a second logic AND module (40) receiving on its input the output signal of the first logic AND module (32) and the output signal of the logic NOR module (38).

5. System (10) according to Claim 4, in which the correction module (18) comprises a time delay module (42) receiving on its input the output signal of the second logic AND module (40) and delivering on its output an automatic upshift signal after a calibrated time delay.

6. System (10) according to Claim 5, in which the duration of the time delay depends on the gear ratio engaged.
